# EUROPÄISCHE PATENTANMELDUNG

(11) **EP 1 790 797 A2**
(43) Veröffentlichungstag der Anmeldung: **30.05.2007**
(21) Anmeldenummer: 06124629.4
(22) Anmeldetag: 23.11.2006
(51) Int. Cl.: E04H 17/10, F16B 29/00

(54) **Pfosten**

(30) Priorität: 23.11.2005 DE 102005056126
(71) Anmelder: Moravia Gesellschaft für Verkehrszeichen und Signalgläser mbH, 65191 Wiesbaden (DE)
(72) Erfinder: JASCHKE, Armin, 65191, Wiesbaden (DE)
(74) Vertreter: Seiffert, Klaus

(57) **Zusammenfassung**

Die vorliegende Erfindung betrifft ein Verfahren zur Befestigung eines Bauteils an der Außenseite eines hohlen Pfostens, der mit einer Rostschutzschicht versehen ist. Um ein einfaches und kostengünstiges Verfahren bereitzustellen, das das nachträgliche Anbringen eines Gegenstandes an einen mit einer Rostschutzschicht versehenen Pfosten ermöglicht, wird erfindungsgemäß vorgeschlagen, daß eine Blindnietmutter in einem in der Wand des Pfostens gegebenenfalls nachträglich eingebrachten Bohrloch verankert wird und das Bauteil über einen Gewindeabschnitt desselben oder mit Hilfe einer entsprechenden Schraube in die Blindnietmutter eingeschraubt wird.

## Beschreibung

Die vorliegende Erfindung betrifft ein Verfahren zur Befestigung eines Bauteils an der Außenseite eines hohlen Pfostens, der mit einer Rostschutzschicht versehen ist sowie einen Pfosten, der für die Anbringung eines Bauteils an seiner Außenseite ausgelegt ist. Derartige Pfosten werden häufig für Absperrungen benutzt, wobei es gelegentlich auch erwünscht ist, an den Pfosten Ösen anzubringen, um diese z.B. mit Ketten verbinden zu können. Zur Herstellung solcher Pfosten ist es üblich, die Ösen an den Pfosten zu schweißen und damit unlösbar mit dem Pfosten zu verbinden. Anschließend werden diese Pfosten mit oder ohne die angeschweißte Öse beispielsweise verzinkt, um sie gegen Witterungseinflüsse zu schützen.

Ein Nachteil dieses Verfahrens liegt dabei in der nachträglichen Anbringung von Ösen, wenn der Pfosten nicht von vornherein damit ausgestattet wird. Um an einen mit einer Rostschutzschicht versehenen Pfosten durch Verschweißen Ösen anzubringen, müssen zunächst die Rostschutzschicht entfernt, die Ösen angeschweißt, die Schweißstelle gereinigt und danach der Pfosten, mindestens in einem die Schweißstelle großzügig einschließenden Bereich, und die Öse, erneut mit einer Rostschutzschicht überzogen werden. Dies ist insbesondere bei dem in der Regel verwendeten Rostschutz durch Feuerverzinkung sehr aufwendig und damit teuer.

Werden die Pfosten von vornherein mit Ösen ausgestattet, so liegt ein weiterer Nachteil der Ösenbefestigung am Pfosten durch Verschweißen darin, daß es nicht möglich ist, die Positionierung der Ösen ohne weiteres an den Verwendungszweck oder die örtlichen Gegebenheiten anzupassen. Dies bedeutet für den Hersteller des Pfostens, daß mehrere Arten von Pfosten (mit einer oder mehreren Ösen, gegebenenfalls in unterschiedlicher Höhe) bereitgestellt werden müssen und sich dadurch die Kosten für die Lagerhaltung erhöhen.

Gleiche Überlegungen gelten selbstverständlich auch bei der festen Anbringung anderer Gegenstände als Ösen an einem Pfosten.

Selbstverständlich ist es möglich Ösen oder andere Bauteile mit Hilfe von beispielsweise Schellen oder Manschetten an Pfosten zu befestigen. Bei dieser Art der Anbringung, wird jedoch unter Umständen der Pfosten zerkratzt und möglicherweise durch dauerhafte einseitige Belastung auch die Rostschutzschicht des Pfostens verletzt, was wiederum zu Korrosionsschäden am Pfosten führt. Im übrigen stellt diese Art der Anbringung aus ästhetischen Gründen eher eine Notlösung dar, da die nachträgliche Anbringung der Öse deutlich sichtbar ist.

Das Herstellen einer Gewindebohrung und das anschließende Schneiden eines Gewindes direkt in die Wand des Pfostens kommt aus mehreren Gründen nicht in Betracht. Zum einen sind die meisten dieser Pfosten relativ dünnwandig (üblich sind Wandstärken zwischen 1 und 5 mm) so daß ein entsprechend kurzes Gewinde nur wenig Halt bietet und leicht ausreißt. Zum anderen wäre eine solche Gewindebohrung einer starken Korrosionsgefahr ausgesetzt, insbesondere, wenn das Material der Schraube nicht mit dem Material des Pfostens übereinstimmt. Eine aufwendige Nachverzinkung wäre dann ebenso unausweichlich, wie im Falle einer nachträglichen Schweißverbindung.

Ausgehend von diesem Stand der Technik liegt der vorliegenden Erfindung die Aufgabe zugrunde, ein einfaches und kostengünstiges Verfahren bereitzustellen, daß das nachträgliche Anbringen eines Gegenstandes an einen mit einer Rostschutzschicht versehenen Pfosten ermöglicht.

Diese Aufgabe wird dadurch gelöst, daß eine Blindnietmutter in einem in der Wand des Pfostens ggf. nachträglich eingebrachten Bohrloch verankert wird und ein Bauteil mit Hilfe einer in die Blindnietmutter eingeschraubten Schraube an dem Pfosten befestigt wird.

Im einfachsten Fall ist das Bauteil selbst eine Schraube, beziehungsweise weist einen zu dem Gewinde der Blindnietmutter passenden Gewindeabschnitt auf.

Auf diese Weise ist es möglich, Bauteile nachträglich an einem vorhandenen Pfosten, Poller, Laternenpfahl oder ähnlichem anzubringen, ohne dessen Rostschutzschicht entfernen zu müssen, wobei sich überraschender Weise gezeigt hat, daß am Bohrungsrand keine Korrosionsgefahr besteht, da durch die besondere Ausbildung des Nietschafts mit einem flachen Kragen auf der Außenseite und einem rückseitigen Wulst, sowie durch eine enge Bohrtoleranz ein Spalt zwischen Blindnietmutter und Bohrungsrand weitgehend verhindert wird. Um einen optimalen Korrosionsschutz zu erreichen, wird das Bohrloch vorzugsweise senkrecht in die Rohrwand des Pfostens eingebracht.

Bevorzugt wird bei dem Verfahren eine Blindnietmutter eingesetzt, für welche die gleiche Art Rostschutzschicht verwendet wird, wie für den Pfosten.

Besonders bevorzugt ist ein erfindungsgemäßes Verfahren, bei dem für die Blindnietmutter und/oder das Bauteil die gleich Art Rostschutzschicht verwendet wird, wie für den Pfosten. Unterschiedliche Rostschutzschichten können sich gegenseitig beeinflussen, insbesondere bei gleichzeitiger Verwendung von kathodischem (z. B. Feuerverzinken) und anodischem (z. B. Aluminiumoxid) Schutz, und dadurch unter Umständen korrosionsbeschleunigend wirken. Daher ist es sinnvoll, alle verwendeten Teile mit der gleichen Art von Rostschutzschicht zu versehen.

Besonders bevorzugt ist auch ein Verfahren, bei dem als Rostschutzschicht eine durch Feuerverzinkung aufgebrachte Zinkschicht verwendet wird. Zink ist ein unedleres Metall als Eisen. Wenn kleine Schadstellen vorhanden sind, fungiert Zink als "Opferanode" und schützt die schadhafte Stahlfläche gegen Korrosion.

Bevorzugt ist auch ein Verfahren, bei dem als Rostschutzschicht eine Metallschicht oder eine korrodierte Metallschicht verwendet wird. Einige Metalle, wie z. B. Aluminium, bilden an ihrer Oberfläche eine oxidische Deckschicht, die vor weiterer Korrosion schützt. Bevorzugt wird bei dem Verfahren ein Bauteil befestigt, das einen von dem eigentlichen Bauteil abstehenden Schaft mit Außengewinde aufweist. Handelt es sich bei dem Bauteil um eine Öse, so ist es möglich, den Pfosten mit weiteren gleichartigen Pfosten mittels Ketten oder ähnlichem zu verbinden.

Besonders bevorzugt ist auch ein Verfahren, bei welchem als Rostschutzschicht eine mittels Pulverbeschichtung aufgebrachte Schicht verwendet wird. Die so aufgebrachten Rostschutzschichten sind sehr schlagfest, abriebfest, chemikalienbeständig und bieten auch ökologische Vorteile.

Weiterhin bevorzugt ist ein Verfahren, bei dem als Rostschutzschicht eine Lackschicht verwendet wird. Lackieren ist eine besonders billige und schnelle Möglichkeit, um Eisen oder Stahl vor Korrosion zu schützen. Wird jedoch die Lackschicht verletzt, so bietet eine Lackierung im Gegensatz zur Feuerverzinkung keinerlei weiteren Schutz vor Korrosion. Darüber hinaus ist es zweckmäßig und oft erwünscht, wenn zusätzlich zu einer Zink- oder anderen Rostschutzschicht eine Lackschicht auf den Pfosten aufgebracht wird, die den Pfosten beispielsweise optisch auffällig macht.

Weiterhin bevorzugt ist ein erfindungsgemäßes Verfahren, bei dem als Pfosten ein Absperrpfosten verwendet wird. Insbesondere bei Absperrpfosten ist es vorteilhaft, wenn unter Umständen nachträglich Gegenstände, wie z. B. Ösen, angebracht werden können, um die Absperrwirkung auf einen größeren Bereich ausdehnen zu können bzw. um mehrere Absperrpfosten miteinander zu verbinden. Es versteht sich aber, daß das erfindungsgemäße Verfahren auch auf Laternenpfosten, die Haltepfosten von Verkehrsschildern und dergleichen angewendet werden kann. Alle diese Gegenstände werden im Sinn der Erfindung als "Pfosten" angesehen.

Besonders bevorzugt ist ein Verfahren, bei dem die Randfläche des Bohrlochs vollständig durch die Blindnietmutter abgedeckt wird. Nur wenn das Bohrloch, insbesondere bis einschließlich zur Außenkante desselben, vollständig abgedeckt ist, wird durch die Blindnietmutter ein Wassereintritt und die dadurch bedingte Korrosion verhindert.

Weiterhin bevorzugt ist ein Verfahren, bei dem eine Blindnietmutter verwendet wird, deren axiale Gewindelänge zwischen 10 und 25 mm, vorzugsweise 15 bis 20 mm, beträgt. Bei dem Rohr eines Pfostens handelt es sich um ein dünnes Metallblech, in welches das Bauteil fest eingeschraubt werden soll, so daß die Konstruktion gewisse Belastungen aushält. Die Blindnietmutter verhindert dabei Punktbelastungen des Rohrmaterials und verteilt die über das Bauteil auf die Blindnietmutter wirkenden Kräfte gleichmäßig auf die gesamt Umgebung des Bohrlochs. Daher werden vorzugsweise Blindnietmuttern mit einer mittleren Gewindelänge verwendet.

Hinsichtlich des eingangs erwähnten Pfostens wird die der Erfindung zugrunde liegende Aufgabe gelöst durch einen Pfosten, welcher hohl ist und mindestens ein Bohrloch in seiner Wand aufweist, wobei eine Blindnietmutter in dem in der Wand des Pfostens ggf. nachträglich eingebrachten Bohrloch verankert ist und ein mit einem passenden Gewinde versehenes Bauteil in die Blindnietmutter einschraubbar ist.

Bevorzugt ist eine Ausführungsform der Erfindung, bei welcher die Blindnietmutter mit der gleichen Rostschutzschicht versehen ist wie der Pfosten.

In einer besonders bevorzugten Ausführungsform der Erfindung ist auch die Blindnietmutter mit der gleichen Rostschutzschicht versehen wie der Pfosten. Hierdurch wird eine Kontaktkorrosion bei Berührung unterschiedlicher Materialien vermieden und alle Teile bleiben korrosionsgeschützt.

Besonders bevorzugt ist eine Ausführung der Erfindung, bei welcher die Rostschutzschicht eine durch Feuerverzinken aufgebrachte Zinkschicht ist.

Bevorzugt ist auch ein erfindungsgemäßer Pfosten, bei welchem die Rostschutzschicht eine Metallschicht oder eine korrodierte Metallschicht ist. Eine Metallschicht oder korrodierte Metallschicht als Rostschutz hat die oben bereits erwähnten Vorteile.

Besonders bevorzugt ist auch ein Pfosten, bei welchem die Rostschutzschicht eine mittels Pulverbeschichtung aufgebrachte Schicht ist. Vorteile der Pulverbeschichtung sind u.a. daß die behandelten Flächen schlag- und kratz- sowie abriebfest sind und außerdem ein Verbiegen weiterhin möglich ist, ohne die Rostschutzschicht zu zerstören.

Weiterhin bevorzugt ist ein erfindungsgemäßer Pfosten, bei dem die Rostschutzschicht eine Lackschicht ist oder bei dem auf die Rostschutzschicht zusätzlich eine Lackschicht aufgebracht ist. Eine zusätzlich auf den Pfosten inklusive Blindnietmutter aufgebrachte Lackschicht bietet einen noch verbesserten Schutz gegenüber der Bildung eines Spalts zwischen Bohrloch und Blindnietmuter.

Analog ist weiterhin ein Pfosten bevorzugt, bei welchem das Bauteil eine Öse mit einem angesetzten Schaft ist, der ein Außengewinde aufweist, wobei ein Pfosten, der als Absperrpfosten ausgebildet ist, besonders bevorzugt ist.

Weiterhin besonders bevorzugt ist eine Ausführungsform der Erfindung, bei welcher die Randfläche des Bohrlochs vollständig durch die Blindnietmutter abgedeckt ist, vorzugsweise einschließlich der Lochkanten und vor allem den an den Außenseiten des Pfostens liegenden Lochkanten.

In einer bevorzugten Ausführungsform der Erfindung beträgt die axiale Gewindelänge der Blindnietmutter zwischen 10 und 25 mm, vorzugsweise 15 bis 20 mm.

Weitere Vorteile, Merkmale und Anwendungsmöglichkeiten der vorliegenden Erfindung werden deutlich anhand der folgenden Beschreibung einer bevorzugten Ausführungsform und der dazugehörigen Figuren. Es zeigen:
- Figur 1: eine Schnittansicht durch einen Pfosten mit zwei Ösen und
- Figur 2: eine Detailansicht aus Figur 1.

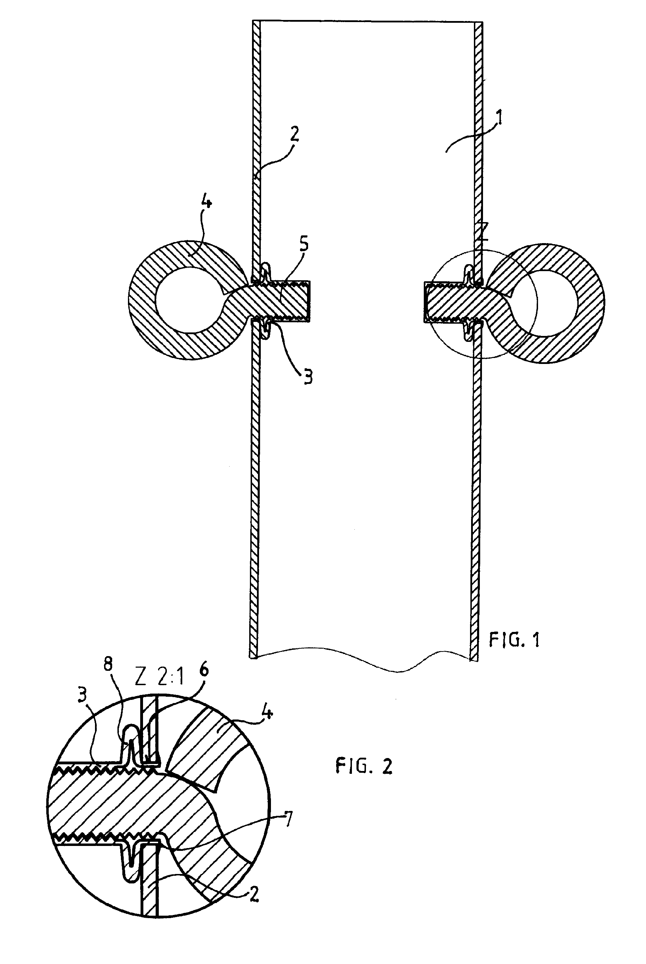

In Figur 1 ist ein Pfosten 1 dargestellt, in dessen Rohr 2 eine Blindnietmutter 3 eingebracht ist. Das Rohr 2 des Pfostens 1 ist aus Kostengründen in der Regel aus Stahl und weist eine Dicke von zwischen 1 und 5 mm auf. Die Blindnietmutter 3 ist in einem Bohrloch in dem Rohr des Pfostens mittels einer Quetschverbindung verankert. Zum Einbringen einer solchen Blindnietmutter ist es ausreichend, ein Loch in den Pfosten zu bohren und die Blindnietmutter mit Hilfe eines Nietwerkzeugs in das Bohrloch zu setzen, es ist hierzu nicht erforderlich, daß das Bohrloch von beiden Seiten zugänglich ist, der Pfosten muß also zum Einbringen der Blindnietmutter nicht von unten oder oben geöffnet werden.

In die Blindnietmutter 3 ist eine Öse 4 mit einem Schaft 5 mit Außengewinde eingeschraubt. Wie deutlich zu sehen ist, beträgt der Durchmesser der Öse 4 ein Vielfaches der Rohrstärke des Pfostens 1. Daher ist es kaum möglich, ein solches Bauteil durch ein unmittelbar in das Rohr des Pfostens geschnittenes Gewinde zu fixieren, da diese Konstruktion zu einem Ausreißen des Gewindes führen würde. Durch die eingebrachte Blindnietmutter 3 werden die auf die Öse wirkenden Kräfte auf eine größere Fläche des Rohrs 2 entlang des Bohrlochumfangs verteilt und damit ein Ausreißen des Bohrlochs verhindert.

Die in Figur 1 gezeigte Blindnietmutter 3 ist im Inneren des Pfostens 1 vollständig geschlossen, so daß, auch wenn keine Öse oder anderes Bauteil in die Blindnietmutter eingeschraubt ist, keine Öffnung in dem Pfosten vorhanden ist, durch die Wasser in das Pfosteninnere eindringen und dort zu Korrosionsschäden führen könnte. Ist das Gewinde der Blindnietmutter zu beiden Seiten hin offen, so sollte dies, sofern kein Bauteil in die Blindnietmutter geschraubt ist, durch Einbringen einer Schraube o.ä. verhindert werden.

Die in Figur 1 abgebildete Öse ist selbst mit einem Schaft 5 mit Außengewinde versehen. Denkbar wäre aber auch, daß die Öse beispielsweise mit einem Bohrloch oder mit einer Scheibe mit Bohrloch versehen ist, so daß sie mit Hilfe einer Schraube in die Blindnietmutter 3 eingeschraubt werden kann. Im übrigen könnte anstelle der geschlossenen Öse auch ein Haken o.ä. in die Blindnietmutter eingeschraubt werden.

Auf der gegenüberliegenden Seite des Pfostens 1 ist eine weitere Öse in gleicher Art angebracht.

In Figur 2 ist der in Figur 1 mit einem Kreis Z gekennzeichnete Ausschnitt vergrößert dargestellt.

Nach dem Einbringen der Blindnietmutter 3 in das Bohrloch mit Hilfe eines Nietwerkzeugs schützt die Blindnietmutter durch einen Kopf 7 von außen und durch einen Wulst 8 von innen die Randfläche 6 des Bohrlochs vor Korrosion durch eintretendes Wasser.

Beim Einbringen der Blindnietmutter werden Kopf 7 und Wulst 8 mit dem dazwischen liegenden Rohr 2 des Pfostens aufeinander gepreßt, so daß sich eine form- und kraftschlüssige Verbindung mit dem dünnwandigen Werkstoff bildet. Der Spalt zwischen der Randfläche 6 des Bohrlochs und der Blindnietmutter wird dadurch minimal.

Der Kopf 7 der Blindnietmutter 3 muß nicht in der Art ausgebildet sein, wie in Figur 2 dargestellt; fehlt er gänzlich, so bildet sich durch die Art des Einbringens der Blindnietmutter 3 ein Wulst, der ebenfalls in der Lage ist, die Randfläche 6 des Bohrlochs zu schützen.

Eventuell zwischen der Blindnietmutter 3 und der Öse 4 eintretendes Wasser kann dort keinen Schaden anrichten, da beide Teile mit einer Rostschutzschicht versehen sind.

## Patentansprüche

1. Verfahren zur Befestigung eines Bauteils an der Außenseite eines hohlen Pfostens (1), der mit einer Rostschutzschicht versehen ist, **dadurch gekennzeichnet, daß** eine Blindnietmutter (3) in einem in der Wand des Pfostens (2) gegebenenfalls nachträglich eingebrachten Bohrloch verankert wird und das Bauteil (4) über einen Gewindeabschnitt (5) desselben oder mit Hilfe einer entsprechenden Schraube in die Blindnietmutter (3) eingeschraubt wird.

2. Verfahren nach Anspruch 1, **dadurch gekennzeichnet, daß** eine Blindnietmutter (3) verwendet wird, die mit der gleichen Art Rostschutzschicht versehen ist, wie der Pfosten (1).

3. Verfahren nach Anspruch 1 oder 2, **dadurch gekennzeichnet, daß** ein Bauteil (4) verwendet wird, das mit der gleichen Art Rostschutzschicht versehen ist, wie der Pfosten (1).

4. Verfahren nach einem der vorangehenden Ansprüche, **dadurch gekennzeichnet, daß** als Rostschutzschicht eine durch Feuerverzinken aufgebrachte Zinkschicht verwendet wird.

5. Verfahren nach einem der Ansprüche 1 bis 3, **dadurch gekennzeichnet, daß** als Rostschutzschicht eine Metallschicht oder eine korrodierte Metallschicht verwendet wird.

6. Verfahren nach einem der Ansprüche 1 bis 3, **dadurch gekennzeichnet, daß** als Rostschutzschicht eine durch Pulverbeschichtung aufgebrachte Schicht verwendet wird.

7. Verfahren nach einem der Ansprüche 1 bis 3, **dadurch gekennzeichnet, daß** als Rostschutzschicht eine Lackschicht verwendet wird oder eine Lackschicht auf eine bestehende Rostschutzschicht aufgetragen wird.

8. Verfahren nach einem der vorangehenden Ansprüche, **dadurch gekennzeichnet, daß** als Bauteil eine Öse (4) mit einem Schaft (5) mit Außengewinde verwendet wird.

9. Verfahren nach einem der vorangehenden Ansprüche, **dadurch gekennzeichnet, daß** als Pfosten (1) ein Absperrpfosten verwendet wird.

10. Verfahren nach einem der vorangehenden Ansprüche, **dadurch gekennzeichnet, daß** die Randfläche (6) des Bohrlochs vollständig durch die Blindnietmutter (3) abgedeckt wird.

11. Verfahren nach einem der vorangehenden Ansprüche, **dadurch gekennzeichnet, daß** eine Blindnietmutter (3) verwendet wird, deren axiale Gewindelänge zwischen 10 und 25 mm, vorzugsweise 15 bis 20 mm beträgt.

12. Pfosten (1) an dessen Außenseite ein Bauteil anbringbar ist, **dadurch gekennzeichnet, daß** der Pfosten (1) als hohler Pfosten ausgebildet ist und eine Blindnietmutter (3) in einem in der Wand des Pfostens (2) gegebenenfalls nachträglich eingebrachten Bohrloch verankert ist, so daß das Bauteil (4) über einen Gewindeabschnitt (5) desselben oder mit Hilfe einer in die Blindnietmutter eingeschraubten Schraube an dem Pfosten anbringbar ist.

13. Pfosten nach Anspruch 12, wobei die Blindnietmutter (3) mit der gleichen Rostschutzschicht versehen ist, wie der Pfosten (1).

14. Pfosten nach einem der Ansprüche 12 oder 13, wobei das Bauteil (4) mit der gleichen Rostschutzschicht versehen ist, wie der Pfosten (1).

15. Pfosten nach einem der Ansprüche 12 bis 14, wobei die Rostschutzschicht eine durch Feuerverzinken aufgebrachte Zinkschicht ist.

16. Pfosten nach einem der Ansprüche 12 bis 14, wobei die Rostschutzschicht eine Metallschicht oder eine korrodierte Metallschicht ist.

17. Pfosten nach einem der Ansprüche 12 bis 14, wobei die Rostschutzschicht eine mittels Pulverbeschichtung aufgebrachte Schicht ist.

18. Pfosten nach einem der Ansprüche 12 bis 14, wobei die Rostschutzschicht eine Lackschicht ist oder eine Lackschicht auf eine bestehende Rostschutzschicht aufgetragen ist.

19. Pfosten nach einem der Ansprüche 12 bis 14, wobei das Bauteil eine Öse (4) mit einem Schaft (5) mit Außengewinde ist.

20. Pfosten nach einem der Ansprüche 12 bis 14, wobei der Pfosten (1) ein Absperrpfosten ist.

21. Pfosten nach einem der Ansprüche 12 bis 14, wobei die Randfläche (6) des Bohrlochs vollständig durch die Blindnietmutter abgedeckt ist.

22. Pfosten (1) nach einem der Ansprüche 12 bis 14, wobei die axiale Gewindelänge der Blindnietmutter (3) zwischen 10 und 25 mm, vorzugsweise 15 bis 20 mm ist.
